# EUROPÄISCHE PATENTSCHRIFT

(11) **EP 4 115 009 B1**
(45) Veröffentlichungstag und Bekanntmachung des Hinweises auf die Patenterteilung: **01.05.2024**
(21) Anmeldenummer: 21709649.4
(22) Anmeldetag: 02.03.2021
(51) Int. Cl.: D01D 13/00, G05B 13/02

(54) **VERFAHREN UND VORRICHTUNG ZUR ÜBERWACHUNG EINER MASCHINENANLAGE ZUR HERSTELLUNG ODER BEHANDLUNG VON SYNTHETISCHEN FASERN**
METHOD AND DEVICE FOR MONITORING MACHINERY FOR THE PRODUCTION OR TREATMENT OF SYNTHETIC FIBRES
PROCÉDÉ ET DISPOSITIF PERMETTANT DE SURVEILLER UNE MACHINERIE POUR LA PRODUCTION OU LE TRAITEMENT DE FIBRES SYNTHÉTIQUES

(30) Priorität: 06.03.2020 DE 102020001454; 23.07.2020 DE 102020004467
(43) Veröffentlichungstag der Anmeldung: 11.01.2023
(73) Patentinhaber: Oerlikon Textile GmbH & Co. KG, 42897 Remscheid (DE)
(72) Erfinder: HUTHMACHER, Jörg, 45768 Marl (DE); NEHRKORN-LUDWIG, Marc-André, 45770 Marl (DE)
(74) Vertreter: Schwenderling, Jens
(86) Internationale Anmeldenummer: PCT/EP2021/055095
(87) Internationale Veröffentlichungsnummer: WO 2021/175803

(56) Entgegenhaltungen:
- WO-A1-2019/091955
- CN-A- 109 583 390
- DE-A1-102004 052 669

## Beschreibung

Die Erfindung betrifft ein Verfahren zur Überwachung einer Maschinenanlage zur Herstellung oder Behandlung von synthetischen Fasern sowie eine Vorrichtung zur Überwachung einer Maschinenanlage zur Herstellung oder Behandlung von Fasern gemäß dem Oberbegriff des Anspruchs 8.

Bei der Herstellung von synthetischen Fasern, beispielsweise beim Schmelzspinnen oder bei der Behandlung von synthetischen Fasern beispielsweise beim Falschdralltexturieren, beeinflussen eine Vielzahl von einzelnen Herstellungsvorgängen, wie Extrudieren, Verstrecken, Verwirbeln, Texturieren, Fixieren, Aufspulen usw. die Qualität der Fäden. Dabei ist jeder einzelne Herstellungsvorgang seinerseits mit einer Vielzahl von Parametern beeinflussbar. Insoweit werden eine Vielzahl von Maschinenkomponenten genutzt, die über Aktoren und Sensoren verfügen, um den Herstellungsvorgang sowie die Faserqualität in der gewünschten Art und Weise zu beeinflussen. Jeder der Maschinenkomponenten ist eine Steuerkomponente zugeordnet, die über ein Maschinennetzwerk mit einer zentralen Maschinensteuereinheit verbunden ist. Zur Überwachung und Steuerung derartiger komplexer Maschinenanlagen ist es nun bekannt, Zustandsparameter und Prozessparameter fortlaufend zu erfassen und mit hinterlegten Soll-Werten abzugleichen. Ein derartiges Verfahren und eine derartige Vorrichtung zur Überwachung einer Maschinenanlage geht beispielsweise aus der DE 10 2018 004 773 A1 hervor.

Bei dem bekannten Verfahren und bei der bekannten Vorrichtung werden Ist-Werte von Prozessparametern wie beispielsweise ein Schmelzedruck oder eine Galettentemperatur und Ist-Werte eines Zustandsparameters wie beispielsweise eine Fadenspannung erfasst und genutzt, um den Prozessparameter auf einen neu ermittelten Soll-Wert einzustellen. Hierbei nutzt man die Hilfe eines Maschinenlernprogramms mit Algorithmen auf Basis statistischer Verfahren sowie Methoden des maschinellen Lernens , durch welche Prozesseinstellungen zur Erzeugung gleichmäßiger Faserqualitäten ermittelt werden.

In Praxis hat sich jedoch gezeigt, dass in derartigen Maschinenanlagen neben Prozessparametern eine Vielzahl von Systemmeldungen existieren, die Warnmeldungen, Fehlermeldungen usw. enthalten. Die Systemmeldungen, die teilweise in Nanosekunden hintereinander auftreten und zum Teil reine Textdarstellungen enthalten, sind in der Vielzahl für einen Operator nicht überschaubar. So werden insbesondere nur einzelne Typen von Systemmeldungen wie beispielsweise Fehlermeldungen beachtet und zur Überwachung und Steuerung der Maschinenanlage genutzt.

Es ist daher Aufgabe der Erfindung, ein Verfahren zur Überwachung und Steuerung einer Maschinenanlage zur Herstellung oder Behandlung von synthetischen Fasern der gattungsgemäßen Art derart weiterzubilden, dass möglichst alle in der Maschinenanlage erzeugten Systemmeldungen für eine Steuerung der Maschinenanlagen nutzbar sind.

Ein weiteres Ziel der Erfindung liegt insbesondere darin, aus der Überwachung der Maschinenanlage zur Herstellung oder Behandlung von synthetischen Fäden eine vorrausschauende Steuerung der Maschinenanlage zu ermöglichen.

Diese Aufgabe wird erfindungsgemäß durch ein Verfahren zur Überwachung einer Maschinenanlage zur Herstellung oder Behandlung von synthetischen Fäden gemäß dem Anspruch 1 gelöst.

Für die Vorrichtung ergibt sich die erfindungsgemäße Lösung dadurch, dass ein Datenrecorder zur kontinuierlichen Erfassung der Systemmeldungen, ein mit dem Datenrecorder verbundener Protokollspeicher zur Speicherung der Systemmeldungen zu Protokolldaten und eine Datenanalyseeinheit vorgesehen sind, die mit dem Protokollspeicher verbunden ist und die zumindest ein Datenanalyseprogramm mit einem Algorithmen auf Basis statistischer Verfahren sowie Methoden des maschinellen Lernens aufweist.

Vorteilhafte Weiterbildungen der Erfindung sind durch die Merkmale und Merkmalskombinationen der jeweiligen Unteransprüche definiert.

Die Erfindung hat erkannt, dass eine Folge von Systemmeldungen Hinweise auf verschiedene Ereignisse aufweisen könnten. So können Meldungssequenzen Hinweise auf "systemische" Ereignisse, wie zum Beispiel den Ausfall einer Komponente, oder "operative" Ereignisse, wie zum Beispiel einen Produktwechsel, geben.. Insoweit werden die von den Maschinenkomponenten, den Steuerkomponenten der Aktoren und Sensoren und der Prozesssteuerung kontinuierlich erzeugten Systemmeldungen fortlaufend erfasst und als Protokolldaten in einem Protokollspeicher gespeichert. Der Protokollspeicher kann hierzu eine Datenbank oder mehrere Dateien enthalten. Anschließend werden die Protokolldaten ausgelesen, vorverarbeitet und mit Hilfe eines Algorithmen auf Basis statistischer Verfahren sowie Methoden des maschinellen Lernens im Hinblick auf Sequenzen von Systemmeldungen analysiert. Dabei gilt es unter anderem, häufige Sequenzen oder Anomalien zu identifizieren, deskriptive Auswertungen durchzuführen oder auch Prognosemodelle zu entwickeln. Einen besonderen Vorteil der Erfindung liegt jedoch darin, dass die Menge an Informationen, die die Systemmeldungen enthalten, mit den Sequenzen auf ein menschlich interpretierbares Niveau reduziert werden.

Insoweit ist die Verfahrensvariante vorgesehen, bei welcher die analytischen Ergebnisse, wie zum Beispiel Sequenz von Systemmeldungen gegenüber einem Operator angezeigt und vom Operator bewertet werden. So weisen derartige Operatoren ein Expertenwissen auf, um Sequenzen von Systemmeldungen bestimmten "systemischen" oder "operativen" Ereignissen innerhalb der Maschinenanlage zuzuordnen. Hierbei kann das Systemereignis bereits erfolgt sein oder noch bevorstehen.

Durch den Einsatz von maschinellem Lernen besteht die Möglichkeit, derartige Expertenwissen fortlaufend zu nutzen zu können. Insoweit ist die Verfahrensvariante bevorzugt ausgeführt, bei welcher der Operator seine Bewertung der Analyseergebnisse dem System zuführt. Damit ergibt sich die Möglichkeit das Expertenwissen bei nachfolgenden Datenanalyse mit einzubinden.

Insoweit ist die Verfahrensvariante besonders vorteilhaft, bei welcher die Sequenzen von Systemmeldungen durch ein System des maschinellen Lernens zur Ermittlung eines "systemischen" oder "operativen" Ereignisses analysiert werden. Hier besteht die Möglichkeit, aus einer identifizierten Sequenz von Systemmeldungen ein Ereignis zu erkennen, das bereits eingetreten ist oder voraussichtlich in naher Zukunft eintreten wird.

Durch die Verfahrensvariante, bei welcher das Analyseereignis gegenüber einem Operator angezeigt wird, ist besonders vorteilhaft, dass der Operator unmittelbar eine Aktion einleiten oder vorbereiten kann, um das Ereignis abzustellen oder zu verhindern. So können beispielsweise Verschleißteile wie Fadenführer vorzeitig ausgetauscht werden.

Alternativ besteht jedoch auch die Möglichkeit, das Analyseereignis einer Maschinensteuereinrichtung zuzuführen und in ein Steuersignal zu einer Prozessänderung und / oder zu einem Prozesseingriff umzuwandeln. So lassen sich auch automatisierte Eingriffe in die Maschinenanlage ausführen.

Zur Gewährleistung, dass die Protokolldaten zeitlich in einer vorgesehenen Reihenfolge vorliegen, werden die Systemmeldungen gemäß einer vorteilhaften Verfahrensvariante bevorzugt mit einem Zeitindex in den Protokolldaten erfasst und in einem Protokollspeicher gespeichert.

Darüber hinaus ist es vorteilhaft, wenn innerhalb der Maschinenanlage einzelne Maschinenkomponenten oder Prozessabschnitte separat analysierbar sind. Hierzu ist es vorgesehen, dass die Systemmeldungen mit einem Hierarchieindex in den Protokolldaten erfasst und in dem Protokollspeicher gespeichert werden. So kann in einem Schmelzspinnprozess die Schmelzeerzeugung unabhängig von den einzelnen Spinnpositionen überwacht werden. Innerhalb der Spinnposition lassen sich so auch einzelne Maschinenkomponenten wie beispielsweise Galetten oder Aufspulmaschinen separat überwachen und deren Systemmeldungen analysieren.

Die erfindungsgemäße Vorrichtung zur Überwachung einer Maschinenanlage zur Herstellung oder Behandlung von synthetischen Fasern bietet somit die Möglichkeit, manuelle oder automatisierte Eingriffe in den Prozess zu ermöglichen, um störenden Ereignissen vorbeugend zu begegnen oder bereits eingetretene Ereignisse schneller zu beheben.

Für den manuellen Eingriff in den Prozess ist die Weiterbildung der erfindungsgemäßen Vorrichtung bevorzugt ausgeführt, bei welcher die Datenanalyseeinheit mit einem Tastenbildschirm in einer Bedienungsstation verbunden ist. Damit lassen sich die Analyseergebnisse oder auch die Systemereignisse direkt gegenüber einem Operator anzeigen. Zudem hat der Operator die Möglichkeit sein Expertenwissen direkt über den Tastenbildschirm in Abhängigkeit von den analysierten Sequenzen von Systemmeldungen einem System des maschinellen Lernens zuzuführen.

Zur Einbindung von Rückmeldungen der Operatoren ist die Weiterbildung der erfindungsgemäßen Vorrichtung vorgesehen, bei welcher die Datenanalyseeinheit zumindest ein einen Algorithmus des maschinellen Lernens aufweist, durch welches Analyseergebnisse und Rückmeldungen der Operatoren korrelierbar sind. Derartige Systeme besitzen den Vorteil der Lernfähigkeit, so dass auch neue Verbindungen zwischen Sequenzen und Systemereignissen ohne den Operator aufgedeckt werden können.

Zur Automatisierung ist die Weiterbildung der erfindungsgemäßen Vorrichtung besonders vorteilhaft, bei welcher die Datenanalyseeinheit mit der Maschinensteuereinrichtung zur Übertragung von maschinenlesbaren Daten verbunden ist und wobei die Steuereinrichtung ein Datenumwandungsmodul zur Erzeugung von Steuerbefehlen aufweist. So lassen sich die festgestellten Systemereignisse unmittelbar in Steuerbefehle umwandeln.

Die Erfindung wird nachfolgend unter Hinweis auf die beigefügten Figuren näher beschrieben.

Es stellen dar:
- Fig. 1: schematisch ein erstes Ausführungsbeispiel der erfindungsgemäßen Vorrichtung zur Überwachung einer Maschinenanlage zur Herstellung synthetischer Fäden
- Fig. 2: schematisch eines der Maschinenfelder der Maschinenanlage aus Fig. 1
- Fig. 3: schematisch ein Ablaufdiagramm zur Überwachung der Maschinenanlage gemäß dem Ausführungsbeispiel nach Fig. 1
- Fig. 4: schematisch eine Querschnittsansicht einer Maschinenanlage zur Behandlung synthetischer Fasern
- Fig. 5.: schematisch ein weiteres Ausführungsbeispiel der erfindungsgemäßen Vorrichtung zur Überwachung der Maschinenanlage gemäß Fig. 4

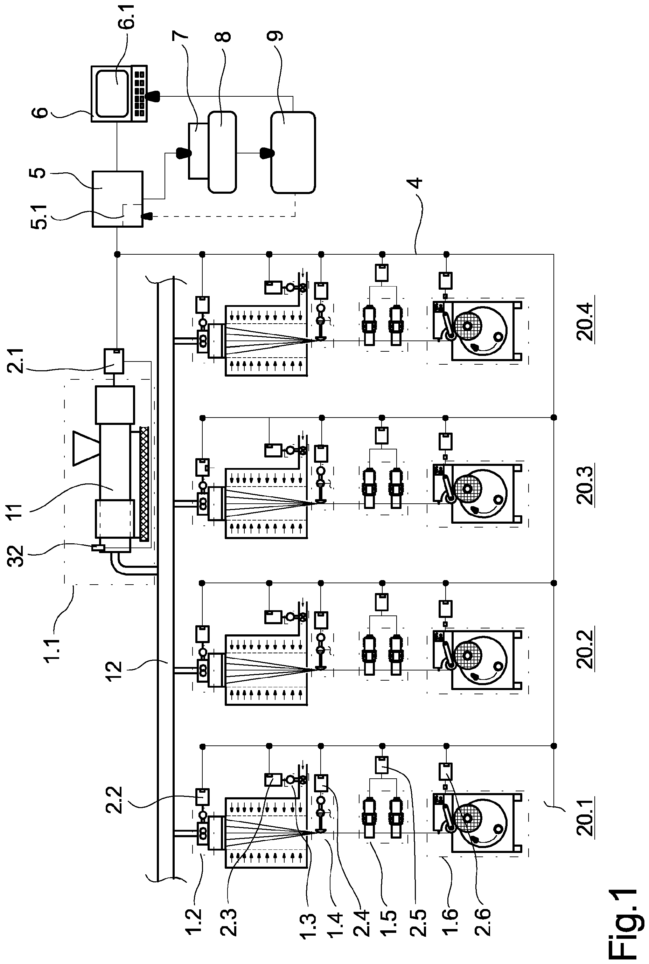

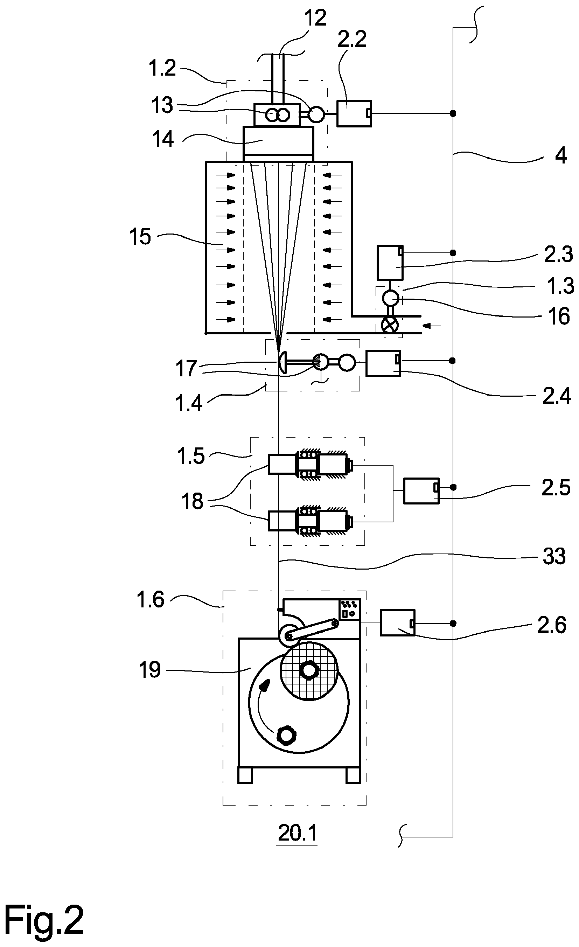

In den Fig. 1 und 2 ist eine Maschinenanlage zur Herstellung synthetischer Fäden mit einer erfindungsgemäßen Vorrichtung zur Überwachung der Maschinenanlage in mehreren Ansichten dargestellt. In Fig. 1 ist schematisch eine Gesamtansicht der Maschinenanlage und in Fig. 2 schematisch eine Teilansicht der Maschinenanlage dargestellt. Soweit kein ausdrücklicher Bezug zu einer der Figuren gemacht ist, gilt die nachfolgende Beschreibung für beide Figuren.

Die Maschinenanlage weist eine Vielzahl von Maschinenkomponenten auf, um den Herstellungsprozess zum Schmelzspinnen von synthetischen Fasern in diesem Fall Filamenten zu steuern. Eine erste Maschinenkomponente 1.1 wird durch einen Extruder 11 gebildet, der über ein Schmelzleitungssystem 12 mit einer Mehrzahl von Spinnpositionen 20.1 bis 20.4 verbunden ist. In der Fig. 1 sind beispielhaft vier Spinnpositionen 20.1 bis 20.4 dargestellt.

Die Spinnpositionen 20.1 bis 20.4 sind identisch aufgebaut und in Fig. 2 ist eine der Spinnpositionen 20.1 schematisch dargestellt. Innerhalb der Spinnposition 20.1 sind mehrere Maschinenkomponenten 1.2, 1.3, 1.4, 1.5 und 1.6 vorgesehen, um das Spinnen einer Fadenschar innerhalb der Spinnposition auszuführen. Insoweit wird in jeder der in Fig. 1 dargestellten Spinnposition eine Fadenschar von beispielsweise 12, 16 oder 32 Fäden erzeugt.

Als Maschinenkomponenten sind in diesem Ausführungsbeispiel die Maschinenteile bezeichnet, die durch Antriebe, Aktoren und Sensoren maßgeblich am Herstellungsprozess beteiligt sind. Neben den Antrieben und Aktoren sind auch hier nicht näher dargestellte Sensoren den Maschinenkomponenten zugeordnet, die zur Steuerung des Herstellungsprozesses nötig sind. So weist die Spinnposition 20.1 als erste Maschinenkomponente 1.2 eine Spinnpumpenvorrichtung 13 auf, die an einem Schmelzeleitungssystem 12 angeschlossen ist und die zum Extrudieren von Filamenten zusammenwirkt. Der Spinnpumpenvorrichtung 13 sind üblicherweise ein Drucksensor und ggf. ein Temperatursensor zugeordnet. Eine zweite Maschinenkomponente 1.3 ist durch eine Gebläseeinheit 16 gebildet, die eine Kühlluftversorgung einer Kühlvorrichtung 15 steuert. Die Kühlvorrichtung 15 ist unterhalb der Spinndüse 14 angeordnet.

Ein nächster Prozessschritt wird durch die Maschinenkomponente 1.4 ausgeführt, die eine Benetzungsvorrichtung 17 umfasst. Das Führen der Fadenschar zum Abziehen und Verstrecken der Filamente wird durch eine Maschinenkomponente 1.5 ausgeführt, die eine Galetteneinheit 18 aufweist. Am Ende des Herstellungsprozesses werden die Fäden zu Spulen gewickelt. Hierzu ist die Maschinenkomponente 1.6 vorgesehen, die die Aufspulmaschine 19 bildet.

Innerhalb der Spinnposition 20.1 sind den Maschinenkomponenten 1.2 bis 1.6 jeweils eine von mehreren Steuerkomponenten 2.2 bis 2.6 zugeordnet. So bilden die Maschinenkomponente 1.2 und die Steuerkomponente 2.2 eine Einheit. Dementsprechend sind die Maschinenkomponenten 1.3 bis 1.6 mit den zugeordneten Steuerkomponenten 2.3 bis 2.6 verbunden.

Zur Kommunikation und Datenübertragung ist jede der Steuerkomponente 2.2 bis 2.6 durch ein Maschinennetzwerk 4 mit einer Maschinensteuereinheit 5 verbunden. Das Maschinennetzwerk 4, das vorzugsweise durch ein Industrie-Ethernet gebildet ist, verbindet die Steuerkomponenten 2.2 bis 2.6 mit der zentralen Maschinensteuereinheit 5.

Wie aus der Darstellung in Fig. 1 hervorgeht, sind so alle Steuerkomponenten 2.2 bis 2.6 der zur Maschinenanlage gehörenden Spinnposition 20.1 bis 20.4 über das Maschinenetzwerk 4 mit der Maschinensteuereinheit 5 verbunden. Die Maschinensteuereinheit 5 ist mit einer Bedienungsstation 6 verbunden, von der aus ein Operator den Herstellungsprozess steuern kann.

Neben den Steuerkomponenten 2.2 bis 2.6 der Spinnpositionen 20.1 bis 20.4 ist auch eine Steuerkomponente 2.1 des Extruders 11 mit der Maschinensteuereinheit 5 verbunden. Hierbei ist der Steuerkomponente 2.1 beispielhaft ein Drucksensor 32 an dem Extruder 11 zugeordnet. Damit lassen sich alle in der Maschinenanlage durch die Maschinenkomponenten und Steuerkomponenten erzeugten Systemmeldungen über das Maschinennetzwerk 4 der Maschinensteuereinheit 5 zuführen.

Wie aus der Darstellung in Fig. 1 hervorgeht, ist der Maschinensteuereinheit 5 ein Datenrecorder 7 sowie ein Protokollspeicher 8 zugeordnet. Hierüber werden alle an der Maschinensteuereinheit 5 übermittelten Systemmeldungen erfasst und innerhalb des Protokollspeichers 8 in den Protokollspeicher abgelegt. Die Protokolldaten des Protokollspeichers können dabei mit einem Zeitindex versehen, um eine zeitliche Reihenfolge bei der Speicherung und Ablage der Systemmeldungen zu erhalten. Als Systemmeldungen können hierbei unter anderem Warnmeldungen, Fehlermelderungen, Statusmeldungen oder auch Textmeldungen erzeugt und der Maschinensteuereinheit 5 zugeführt werden. Neben dem Zeitindex können den Systemmeldungen auch ein Hierarchieindex zugeordnet, um Maschinenkomponenten oder Spinnpositionen identifizieren zu können.

Der Protokollspeicher 8 ist mit einer Datenanalyseeinheit 9 verbunden, um die innerhalb des Protokollspeichers enthaltenen Protokolldaten direkt zu analysieren. Die Datenanalyseeinheit 9 enthält zumindest ein Datenanalyseprogramm mit einem Analysealgorithmus, um aus den Protokolldaten sich bevorzugt wiederholende Sequenzen von Systemmeldungen zu identifizieren. So können sich beispielsweise Sequenzmuster oder Anomalien oder auch deskriptive Statistiken ergeben. Damit wird zunächst eine Komprimierung der Informationen erreicht, um diese durch einen Operator bewerten zu lassen. So ist aus dem Expertenwissen der Operatoren bekannt, dass sich bestimmte Sequenzen von Systemmeldungen mit "systemischen" oder "operativen" Ereignissen, wie zum Beispiel Fadenbrüchen, Komponentenausfällen, Produktwechseln oder auch Bauteilverschleiß, korrelieren lassen.. Somit kann der Operator durch Analysieren der aufgefundenen Sequenzen von Systemmeldungen beispielsweise bevorstehende Ereignisse erkennen und ggf. Vorsorgemaßnahmen zur Prozessänderung oder zur Wartung einer Maschinenkomponente einleiten. Daher ist die Datenanalyseeinheit 9 direkt mit einem Tastenbildschirm 6.1 der Bedienungsstation 6 gekoppelt. Der Tastenbildschirm 6.1 ermöglicht neben der Visualisierung von Sequenzen von Systemmeldungen und anderen Analyseergebnissen auch die direkte Eingabe von Rückmeldungen durch den Operator, so dass das Expertenwissen mit den Ergebnissen korreliert und zur fortlaufenden Verbesserung der Analyseergebnisse genutzt werden kann.

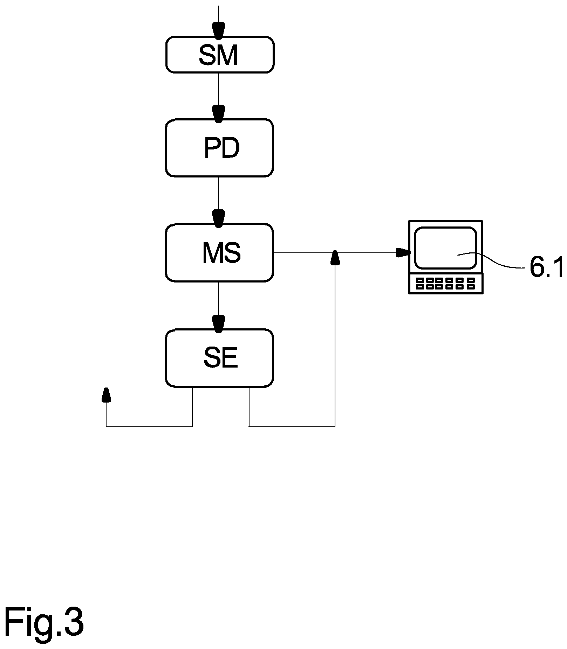

Zur weiteren Erläuterung des erfindungsgemäßen Verfahrens und der erfindungsgemäßen Vorrichtung zur Überwachung der Maschinenanlage wird zusätzlich zu der Fig. 3 Bezug genommen. In der Fig. 3 ist ein Ablaufdiagramm schematisch dargestellt, um die innerhalb der Maschinenanlage anfallenden Systemmeldungen zur Steuerung der Maschinen nutzen zu können.

Wie in der Fig. 3 dargestellt ist, werden zunächst alle Systemmeldungen der Maschinenanlage protokolliert. Die Systemmeldungen SM sind in der Fig. 3 mit dem Buchstabenkürzel SM dargestellt. Die Systemmeldungen werden durch den Datenrecorder 7 protokolliert und in dem Protokollspeicher 8 gespeichert. Die gesammelten als Protokolldaten abgelegten Systemmeldungen sind in dem Protokollspeicher bevorzugt als eine Datenbank enthalten. Der Protokollspeicher ist mit dem Buchstabenkürzel PD gekennzeichnet und in Fig. 3 gezeigt.

Die Protokolldaten des Protokollspeichers PD werden durch die Datenanalyseeinheit 9 ausgelesen und mit Hilfe von Algorithmen auf Basis statistischer Verfahren sowie Methoden des maschinellen Lernens fortlaufend analysiert. So wird vorzugsweise zunächst mit Hilfe eines Analysealgorithmus nach häufigen Sequenzen von Systemmeldungen gesucht. So lassen sich in einer ersten Analyse der Protokolldaten die auffälligen Sequenzen ermitteln. Damit wird bereits eine erhebliche Komprimierung der Dateninformationen erreicht, um diese beispielsweise durch einen Operator bewerten zu lassen. Die Sequenzen sind in Fig. 3 mit dem Buchstabenkürzel MS gekennzeichnet. Um das Expertenwissen eines Operators zu nutzen, werden diese Sequenzen oder andere Analyseergebnisse vorteilhaft der Bedienstation 6 zu geführt, um durch einen Tastenbildschirm 6.1 visualisiert zu werden. Aus der Sequenz von Systemmeldungen kann somit der erfahrende Operator bereits Rückschlüsse auf mögliche Ereignisse innerhalb der Maschinenanlage schließen. So könnten beispielsweise in einer Sequenz von Druckmeldungen eines Schmelzedruckes und Fadenbrüchen ein Hinweis enthalten sein, dass beispielsweise in einer der Spinnpositionen ein Schaben der Spinndüsen erforderlich wird. Die Erfahrungen der Operatoren lässt sich über den Tastenbildschirm 6.1 auch unmittelbar mit den Analyseergebnissen korrelieren und speichern, um somit das Expertenwissen der Operatoren zu digitalisieren.

In Systemen, in denen derartiges Expertenwissen der Operatoren bereits durch Methoden des maschinelles Lernen nachgebildet werden kann, lässt sich in einem weiteren Schritt eine vertiefende Analyse mit Hilfe von Rückmeldungen von Operatoren durchführen. Das Datenanalyseprogramm der Datenanalyseeinheit 9 kann somit mehrere Algorithmen zur vertiefenden Analyse aufweisen. Hierbei werden beispielsweise bestimmten Sequenzen mögliche "systemische" oder "operative" Ereignisse zugeordnet. Insbesondere bei den Ereignissen, die mit hoher Wahrscheinlichkeit bereits aufgetreten sind oder auftreten werden, können diese unmittelbar an die Maschinensteuereinheit 5 übertragen werden.

Wie in der Fig. 1 dargestellt ist, weist die Maschinensteuereinheit 5 hierzu ein Datenumwandungsmodul 5.1 auf, in welchem die von der Datenanalyseeinheit 9 übermittelten Systemereignisse in entsprechende Steuerbefehle umgewandelt werden. Somit lässt sich ein automatisierter Eingriff in den Prozess durchführen, um beispielsweise eine Wartung an einer der Maschinenkomponenten beispielsweise einer Aufspulmaschine in den Spinnpositionen vornehmen zu können. So ist es bekannt, dass die Aufspulmaschinen in Abhängigkeit von ihrem Lebenszyklus regelmäßige Wartungen erhalten.

Wie aus der Darstellung in Fig. 3 hervorgeht, besteht jedoch auch die Möglichkeit, die durch die weitergehende Datenanalyse ermittelte Systemereignis zur Beurteilung einem Operator anzuzeigen. Insbesondere bei den Analyseergebnissen, bei welchem die Systemereignisse mit geringerer Wahrscheinlichkeit vorliegen, ist eine Übermittlung an die Bedienstation 6 zu Visualisierung des Systemereignisses vorteilhaft.

Um mögliche Sequenzen von Systemmeldungen einzelner Spinnpositionen oder den vorgeordneten Maschinenkomponenten zur Schmelzeerzeugung aufdecken zu können, ist desweiteren vorteilhaft, den Systemmeldungen ein Hierarchieindex zuzuordnen. Mit Hilfe des Hierarchieindexes und des Zeitindexes, die den Systemmeldungen zugefügt werden, können somit durch einfache Datenfilterung Sequenzen gefunden werden, die den Spinnpositionen oder der Schmelzeerzeugung zuzuordnen sind. Damit können die Systemmeldungen komplexer Maschinenanlagen sowohl in der Gesamtheit des Prozesses als auch in Teilprozessen analysiert werden.

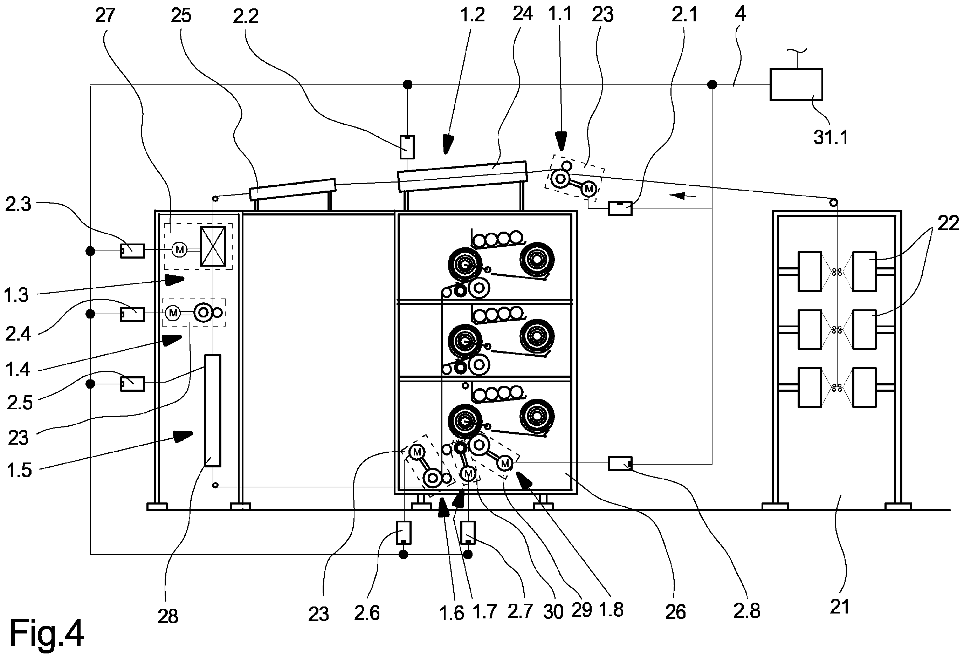

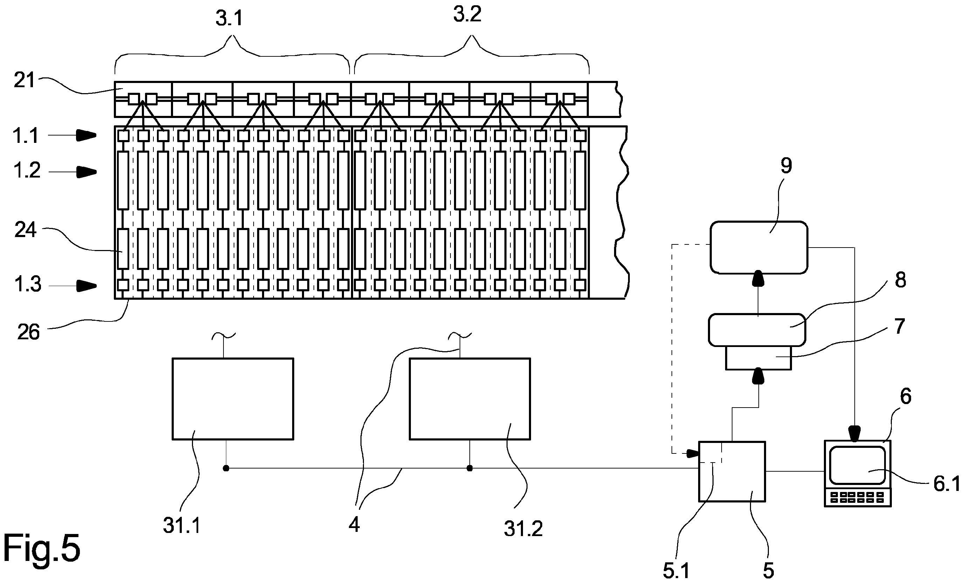

Bei dem in Fig. 1 und 2 dargestellten Maschinenanlage wird ein Herstellungsprozess von Fäden als Beispiel herangezogen. Grundsätzlich können in einem Schmelzspinnprozess Fasern erzeugt werden, die zu Stapelfasern geschnitten oder zu Vliesen abgelegt werden. Neben der Herstellung der synthetischen Fasern sind jedoch auch Maschinenanlagen bekannt, die eine Behandlung der Fasern wie beispielsweise eine Behandlung der Fäden oder Fasertowe ausführen. In den Fig. 4 und 5 ist ein Ausführungsbeispiel der erfindungsgemäßen Vorrichtung zur Überwachung einer Maschinenanlage am Beispiel einer Texturiermaschine gezeigt. In Fig. 4 ist hierzu eine Querschnittsansicht und in Fig. 5 eine Draufsicht der Texturier Maschine gezeigt.

Die zum Texturieren von Fäden vorgesehen Maschinenanlage umfasst eine Vielzahl von Bearbeitungsstellen pro Faden, wobei innerhalb der Maschinenanlage hunderte von Fäden gleichzeitig behandelt werden. Die Bearbeitungsstationen sind innerhalb der Maschinenanlage identisch ausgeführt und weisen jeweils mehrere Maschinenkomponenten zur Steuerung des Behandlungsprozesses auf.

In Fig. 4 sind die Maschinenkomponenten 1.1 bis 1.8 einer der Bearbeitungsstationen dargestellt. In diesem Ausführungsbeispiel werden die Maschinenkomponenten 1.1 bis 1.8 durch mehrere Lieferwerke 23, einer Heizeinrichtung 24, einem Texturieraggregat 27, einer Set-Heizeinrichtung 28, einer Spulvorrichtung 29 und einer Changiervorrichtung 30 gebildet.

Die Maschinenkomponenten 1.1 bis 1.8 sind innerhalb eines Maschinengestells 26 zu einem Fadenlauf hintereinander angeordnet, um einen Texturierprozess auszuführen. Hierzu wird ein Faden durch eine Vorlagespule 22 in einem Gattergestell 21 bereitgehalten. Der Faden wird von dem ersten Lieferwerk 23 abgezogen und innerhalb einer Texturierzone durch die Heizeinrichtung 24 erhitzt und anschließend durch die Kühlvorrichtung 25 abgekühlt. Im weiteren Verlauf folgt eine Texturierung und Nachbehandlung des Fadens, um anschließend in der Spulvorrichtung 29 zu einer Spule gewickelt zu werden.

Da die Spulvorrichtung 29 eine größere Maschinenbreite beansprucht im Verhältnis zu den vorgeordneten Maschinenkomponenten 1.1 bis 1.6 sind mehrere Spulvorrichtungen 29 etagenförmig in dem Maschinengestell 26 angeordnet. Den in den Bearbeitungsstationen vorgesehenen Maschinenkomponenten 1.1 bis 1.8 sind jeweils separate Steuerkomponenten 2.1 bis 2.8 zugeordnet, um die jeweiligen Maschinenkomponenten 1.1 bis 1.8 mit den zugeordneten Aktoren und Sensoren zu steuern. Die Steuerkomponenten 2.1 bis 2.8 sind über ein Maschinennetzwerk 4 mit einer Feldsteuerstation 31.1 verbunden.

Wie aus der Darstellung in Fig. 5 hervorgeht, sind die Maschinenkomponenten von insgesamt 12 Bearbeitungsstationen zu einem Maschinenfeld 3.1 zusammengefasst. Die innerhalb des Maschinenfeldes 3.1 vorgesehenen Steuerkomponenten 2.1 bis 2.8 der Maschinenkomponenten 1.1 bis 1.8 sind alle in dem Maschinennetzwerk 4 eingebunden und mit der Feldsteuerstation 31.1 verbunden.

In der Maschinenanlage sind eine Mehrzahl von Maschinenfeldern vorgesehen, wobei in diesem Ausführungsbeispiel nur zwei der Maschinenfelder gezeigt sind. Die den Maschinenfeldern 3.1 und 3.2 zugeordneten Feldsteuerstationen 31.1 und 31.2 sind in dem Maschinennetzwerk 4 eingebunden und mit einer zentralen Maschinensteuereinheit 5 gekoppelt. Die Funktion zur Kommunikation und Datentransfer erfolgt hierbei analog zu dem vorgenannten Ausführungsbeispiel der Maschinenanlage, so dass alle Systemmeldungen der Maschinenkomponenten 1.1 bis 1.8 und Steuerkomponenten 2.1 bis 2.8 aller Maschinenfelder 3.1 und 3.2 über das Maschinennetzwerk 4 letztendlich der Maschinensteuereinheit 5 zugeführt werden. Die Maschinensteuereinheit 5 ist mit einer Bedienungsstation 6 verbunden, durch welche der Prozess und die Maschinenanlage kontrollierbar und steuerbar ist.

Um die Vielzahl der Systemmeldungen zur Steuerung des Behandlungsprozesses nutzen zu können, weist die erfindungsgemäße Vorrichtung neben der Maschinensteuereinheit 5 zumindest einen Datenrecorder 7, einen Protokollspeicher 8 und eine Datenanalyseeinheit 9 auf. Die Datenanalyseeinheit 9 ist dabei mit der Bedienungsstation 6 gekoppelt, um Ergebnisse aus der Datenanalyse an einem Tastenbildschirm 6.1 zu visualisieren und um Operator-Eingaben zu empfangen. Die Systemmeldungen enthalten hierbei ebenfalls Warnmeldungen, Fehlermeldungen, Prozessstörungen und Textinformationen. Auch hierbei lassen sich durch Identifizierung von Sequenzen oft mögliche "systemische" oder "operative" Ereignisse folgern. So lässt sich beispielsweise durch Hinzufügen eines Hierarchieindexes feststellen, in welchem Maschinenfeld ein mögliches Systemereignis beispielsweise eine Verschmutzung der Kühlvorrichtung oder eine Verschleißerscheinung des Fadenführers kurz bevorsteht. Das Ausführungsbeispiel der erfindungsgemäßen Vorrichtung zur Überwachung der Maschinenanlage ist hierzu im Wesentlichen identisch zu dem vorgenannten Ausführungsbeispiel, so dass auch das in Fig. 3 dargestellte Ablaufdiagramm hierzu gültig ist.

## Patentansprüche

1. Verfahren zur Überwachung einer Maschinenanlage zur Herstellung oder Behandlung synthetischer Fasern in folgenden Schritten:
1.1. Fortlaufendes Generieren und Erfassen von Systemmeldungen von Maschinenkomponenten und Steuerkomponenten;
1.2. Kontinuierliches Speichern der Systemmeldungen zu Protokolldaten in einem Protokollspeicherspeicher und
1.3. Auslesen , Vorverarbeiten und Analysieren der Protokolldaten mit Hilfe von Algorithmen auf Basis statistischer Verfahren sowie Methoden des maschinellen Lernens zur Identifizierung von häufigen Sequenzen von Systemmeldungen und/oder eine Anomalie.

2. Verfahren nach Anspruch 1, **dadurch gekennzeichnet, dass** die Sequenzen von Systemmeldungen gegenüber einem Operator angezeigt und vom Operator aus- und bewertet werden.

3. Verfahren nach Anspruch 2, **dadurch gekennzeichnet, dass** Rückmeldungen des Operators zu Analyseergebnissen dem System des maschinellen Lernens zugeführt und gespeichert werden..

4. Verfahren nach einem der Ansprüche 3, **dadurch gekennzeichnet, dass** die Analyseergebnisse mit den Rückmeldungen der Operatoren durch die Alogrithmen des maschinellen Lernens korreliert werden, um "systemische" und "operative" Ereignisse in den Meldungssequenzen zu identifizieren und Ereignisse zu prognostizieren.

5. Verfahren nach Anspruch 4, **dadurch gekennzeichnet, dass** das Systemereignis gegenüber einem Operator angezeigt wird.

6. Verfahren nach Anspruch 4, **dadurch gekennzeichnet, dass** zumindest eines der Analyseergebnisse einer Steuereinrichtung zugeführt wird und in ein Steuersignal zu einer Prozessänderung und/oder zu einem Prozesseingriff umgewandelt wird.

7. Verfahren nach einem der Ansprüche 1 bis 6, **dadurch gekennzeichnet, dass** die Systemmeldungen mit einem Zeitindex in den Protokolldaten erfasst und in dem Protokollspeicher gespeichert werden.

8. Verfahren nach einem der Ansprüche 1 bis 7, **dadurch gekennzeichnet, dass** die Systemmeldungen mit einem Hierarchieindex in den Protokolldaten erfasst und in dem Protokollspeichergespeichert werden.

9. Vorrichtung zur Überwachung einer Maschinenanlage zur Herstellung oder Behandlung synthetische Fasern mit einer Maschinensteuereinrichtung (5), die mit Maschinenkomponenten (1.1 - 1.8) und Steuerkomponenten (2.1 - 2.8) zum Empfang von Systemmeldungen verbunden ist, **gekennzeichnet durch**:
einen Datenrecorder (7) zur kontinuierlichen Erfassung der Systemmeldungen, einen mit dem Datenrecorder (7) verbundenen Protokollspeicher (8) zur Speicherung der Systemmeldungen zu Protokolldaten und einer Datenanalyseeinheit (9), die mit dem Protokollspeicher (8) verbunden ist und die zumindest ein Datenanalyseprogramm mit Algorithmen auf Basis statistischer Verfahren sowie Methoden des maschinellen Lernens aufweist.

10. Vorrichtung nach Anspruch 9, **dadurch gekennzeichnet, dass** die Datenanalyseeinheit (9) mit einem Tastenbildschirm (6.1) in einer Bedienungsstation (6) verbunden ist.

11. Vorrichtung nach Anspruch 9 oder 10, **dadurch gekennzeichnet, dass** die Datenanalyseeinheit (9) zumindest ein Algorithmus des maschinellen Lernens aufweist, durch welches Analyseergebnisse und Rückmeldungen der Operatoren korrelierbar sind.

12. Vorrichtung nach Anspruch 11, **dadurch gekennzeichnet, dass** die Datenanalyseeinheit (9) mit der Maschinensteuereinrichtung (5) zur Übertragung von maschinenlesbaren Daten verbunden ist, wobei die Maschinensteuereinrichtung (5) ein Datenumwandlungsmodul (5.1) zur Erzeugung von Steuerbefehlen aufweist.

## Claims

1. A method for monitoring machinery for the production or treatment of synthetic fibers in the following steps:
1.1. constant generation and recording of system messages of machine components and control components;
1.2. continuous storage of the system messages as log data in a log memory, and
1.3. readout, preprocessing and analysis of the log data with the aid of algorithms based on statistical procedures and machine learning methods in order to identify frequent sequences of system messages and/or an anomaly.

2. The method as claimed in claim 1, **characterized in that** the sequences of system messages are displayed to an operator and assessed and evaluated by the operator.

3. The method as claimed in claim 2, **characterized in that** return messages of the operator relating to analysis results are delivered to the machine learning system and stored.

4. The method as claimed in claim 3, **characterized in that** the analysis results are correlated with the return messages of the operators by the machine learning algorithms in order to identify "systemic" and "operative" events in the message sequences and to predict events.

5. The method as claimed in claim 4, **characterized in that** the system event is displayed to an operator.

6. The method as claimed in claim 4, **characterized in that** at least one of the analysis results is delivered to a controller and is converted into a control signal for a process modification and/or a process intervention.

7. The method as claimed in one of claims 1 to 6, **characterized in that** the system messages are recorded in the log data, and stored in the log memory, with a time index.

8. The method as claimed in one of claims 1 to 7, **characterized in that** the system messages are recorded in the log data, and stored in the log memory, with a hierarchy index.

9. A device for monitoring machinery for the production or treatment of synthetic fibers, having a machine controller (5) which is connected to machine components (1.1 - 1.8) and control components (2.1 - 2.8) in order to receive system messages, **characterized by**:
a data logger (7) for continuous recording of the system messages, a log memory (8) connected to the data logger (7) in order to store the system messages as log data, and a data analysis unit (9) which is connected to the log memory (8) and which comprises at least one data analysis program having algorithms based on statistical procedures and machine learning methods.

10. The device as claimed in claim 9, **characterized in that** the data analysis unit (9) is connected to a touchscreen (6.1) in a control station (6).

11. The device as claimed in claim 9 or 10, **characterized in that** the data analysis unit (9) has at least one machine learning algorithm by which analysis results and return messages of the operators can be correlated.

12. The device as claimed in claim 11, **characterized in that** the data analysis unit (9) is connected to the machine controller (5) in order to transmit machinereadable data, the machine controller (5) comprising a data conversion module (5.1) for generating control instructions.

## Revendications

1. Procédé permettant de surveiller une machinerie pour la production ou le traitement de fibres synthétiques par les étapes suivantes consistant à :
1.1. générer et détecter en continu des messages système de composants de machine et de composants de commande ;
1.2. mémoriser en continu les messages système concernant des données de journal dans une mémoire de journal ; et
1.3 lire, prétraiter et analyser les données de journal à l'aide d'algorithmes sur la base de procédés statistiques ainsi que de méthodes d'apprentissage machine pour identifier des séquences fréquentes de messages système et/ou d'une anomalie.

2. Procédé selon la revendication 1, **caractérisé en ce que** les séquences de messages système sont affichés en face d'un opérateur et sont évalués et interprétés par l'opérateur.

3. Procédé selon la revendication 2, **caractérisé en ce que** des informations en retour de l'opérateur au sujet des résultats d'analyse sont amenées au système d'apprentissage machine et sont mémorisées.

4. Procédé selon la revendication 3, **caractérisé en ce que** les résultats d'analyse sont mis en corrélation avec les informations de retour des opérateurs par les algorithmes d'apprentissage machine afin de prédire des événements
« systémiques » et « opérationnels » dans les séquences de messages et de prédire des événements.

5. Procédé selon la revendication 4, **caractérisé en ce que** l'évènement système est affiché en face d'un opérateur.

6. Procédé selon la revendication 4, **caractérisé en ce qu'**au moins l'un des résultats d'analyse est amené à un équipement de commande et est converti en un signal de commande concernant une modification de processus et/ou une intervention sur le processus.

7. Procédé selon l'une quelconque des revendications 1 à 6, **caractérisé en ce que** les messages système sont détectés avec un indice temporel dans les données de journal et sont mémorisés dans la mémoire de journal.

8. Procédé selon l'une quelconque des revendications 1 à 7, **caractérisé en ce que** les messages système sont détectés avec un indice hiérarchique dans les données de journal et sont mémorisés dans la mémoire de journal.

9. Dispositif permettant de surveiller une machinerie pour la production et le traitement de fibres synthétiques, comprenant un équipement de commande de machine (5) qui est relié à des composants de machine (1.1 à 1.8) et à des composants de commande (2.1 à 2.8) pour recevoir des messages système, **caractérisé par**:
un enregistreur de données (7) pour détecter en continu les messages système, une mémoire de journal (8) reliée à l'enregistreur de données (7) pour mémoriser les messages système concernant les données de journal et une unité d'analyse de données (9) qui est reliée à la mémoire de journal (8) et qui présente au moins un programme d'analyse de données avec des algorithmes sur la base de procédés statistiques ainsi que de méthodes d'apprentissage machine.

10. Dispositif selon la revendication 9, **caractérisé en ce que** l'unité d'analyse de données (9) est reliée à un écran tactile (6.1) dans un poste de commande (6).

11. Dispositif selon la revendication 9 ou 10, **caractérisé en ce que** l'unité d'analyse de données (9) présente au moins un algorithme d'apprentissage machine qui permet de mettre en corrélation des résultats d'analyse et des informations de retour des opérateurs.

12. Dispositif selon la revendication 11, **caractérisé en ce que** l'unité d'analyse de données (9) est reliée à l'équipement de commande de machine (5) pour transmettre des données lisibles par machine, dans lequel l'équipement de commande de machine (5) présente un module de conversion de données (5.1) pour générer des instructions de commande.
